# EUROPÄISCHE PATENTSCHRIFT

(11) **EP 3 446 899 B1**
(45) Veröffentlichungstag und Bekanntmachung des Hinweises auf die Patenterteilung: **26.02.2020**
(21) Anmeldenummer: 18187085.8
(22) Anmeldetag: 02.08.2018
(51) Int. Cl.: B60H 1/32, B60H 1/00

(54) **KLIMATISIERUNGSVORRICHTUNG FÜR EIN KRAFTFAHRZEUG UND VERFAHREN ZU DEREN BETRIEB**
AIR CONDITIONING DEVICE FOR A MOTOR VEHICLE AND METHOD FOR OPERATING SAME
DISPOSITIF DE CLIMATISATION POUR UN VÉHICULE AUTOMOBILE ET SON PROCÉDÉ DE FONCTIONNEMENT

(30) Priorität: 17.08.2017 DE 102017214356
(43) Veröffentlichungstag der Anmeldung: 27.02.2019
(73) Patentinhaber: Volkswagen Aktiengesellschaft, 38440 Wolfsburg (DE)
(72) Erfinder: Lange, Maik, 29393 Groß Oesingen (DE); Scheck, Andreas, 30916 Isernhagen (DE)

(56) Entgegenhaltungen:
- EP-A1- 2 770 282
- JP-A- 2009 063 230
- US-A1- 2006 137 853
- US-A1- 2008 245 503

## Beschreibung

Die Erfindung bezieht sich auf eine Klimatisierungsvorrichtung für ein Kraftfahrzeug, umfassend
- einen Kältemittelkreis mit einem Kältemittel-Hauptkreis, der einen Kompressor, einen Kondensator/Gaskühler, ein erstes Expansionsorgan und einen als einen ersten Verdampfer betreibbaren Luft/Kältemittel-Wärmeübertrager aufweist, die in Strömungsrichtung des Kältemittels in dieser Reihenfolge im Kältemittel-Hauptkreis angeordnet sind, sowie
- einen Kühlmittelkreis mit einer Kühlmittelpumpe und einem thermisch mit einer Wärmequelle gekoppelten Aufnahme-Wärmeübertrager,
wobei der Kältemittelkreis und der Kühlmittelkreis mittels eines als Kühlmittel/Kältemittel-Wärmeübertrager ausgebildeten Koppel-Wärmeübertragers, der kältemittelseitig in Strömungsrichtung des Kältemittels dem ersten Verdampfer nachgeschaltet und ebenfalls als Verdampfer betreibbar ist, thermisch miteinander gekoppelt sind.

Die Erfindung bezieht sich weiter auf ein Verfahren zum Betrieb einer derartigen Klimatisierungseinrichtung.

Gattungsgemäße Klimatisierungsvorrichtungen und Verfahren zu deren Betrieb sind bekannt aus der EP 1 434 967 B1 und der US 2006/0137853 A1.

Die zunehmende Elektrifizierung von Kraftfahrzeugen macht komplexe Klimatisierungslösungen erforderlich. Einerseits steht Abwärme einer Verbrennungskraftmaschine zu Heizzwecken nicht oder nur in beschränktem Umfang zur Verfügung. Andererseits bedürfen elektrische oder elektronische Komponenten, wie beispielsweise eine Traktionsbatterie, einer aktiven Kühlung, die nicht durch herkömmliche, passive Kühlmittekreise, wie sie von der Kühlung von Verbrennungsmotoren her bekannt sind, erzielt werden kann.

Die grundsätzlich denkbare Möglichkeit, für die Kühlung elektrischer oder elektronischer Komponenten einerseits und die Klimatisierung der Fahrgastzelle andererseits unterschiedliche, jeweils vollständige Kältemittelkreise einzusetzen, ist aus Kosten- und Bauraumgründen nicht praktikabel. Zur Zonenklimatisierung der Fahrgastzelle ist es bekannt, den (einzigen) Kältemittelkreis mit zwei parallel geschalteten Verdampfern auszustatten, die durch jeweils zugeordnete Expansionsorgane unabhängig voneinander gesteuert werden können. Dieser grundsätzlich praktikable Ansatz stößt jedoch bei der Parallelschaltung von mehr als zwei Verdampfern an Grenzen. Insbesondere erhöht sich die Gefahr, dass einer oder mehrere der Verdampfer für mit dem Kältemittel umlaufendes Öl zur Schmierung des Kompressors zur "Falle" wird, sodass sich dessen Ausfallrisiko erhöht. Dies gilt insbesondere in Fällen, in denen einer der parallelen Verdampfer über längere Zeiten ungenutzt bleibt, wie dies für einen Elektronik-Kühler insbesondere in der kalten Jahreszeit durchaus vorkommen kann. Im Gegensatz dazu bleiben die mit der Luft in der Fahrgastzelle thermisch gekoppelten Verdampfer typischerweise auch bei kalten Außentemperaturen in Betrieb, nämlich als Luftentfeuchter oder ggf. im Kontext einer Wärmepumpenanwendung.

Aus der vorgenannten, gattungsbildenden Druckschrift ist ein Kältemittelkreis mit einem Kompressor, einem Kondensator/Gaskühler, einem Expansionsorgan und einem als Luft/Kältemittel-Wärmeübertrager ausgebildeten ersten Verdampfer bekannt, wobei dem ersten Verdampfer ein ebenfalls als Verdampfer betreibbarer Koppel-Wärmeübertrager nachgeschaltet ist. Der Koppel-Wärmeübertrager ist als Kühlmittel/Kältemittel-Wärmeübertrager ausgebildet und koppelt den Kältemittelkreis thermisch mit einem Kühlmittekreis, der seinerseits thermisch mit der zu kühlenden, d.h. als Wärmequelle wirkenden Elektronik thermisch gekoppelt ist. Mit dem hier verwendeten Begriff "Kondensator/Gaskühler" ist dasjenige Bauteil gemeint, welches zwischen dem Kompressor und dem Expansionsorgan der Kühlung des verdichteten Kältemittels dient, wobei dies je nach verwendetem Kältemittel mit einer echten Kondensation, d.h. einer Verflüssigung des zuvor gasförmigen Kältemittels oder einer reinen Abkühlung des in seinem gasförmigen Zustand verbleibenden Kältemittels verbunden sein kann.

Nachteilig bei der bekannten Lösung ist die fehlende Unabhängigkeit im Betrieb von erstem Verdampfer und Koppel-Wärmeübertrager. Der Fachmann wird erkennen, dass der erste Verdampfer so betrieben werden muss, dass an seinem Ausgang noch eine Restmenge verdampfbaren Kältemittels vorliegt, die im nachgeschalteten, ebenfalls als Verdampfer wirkenden Koppel-Wärmeübertrager verdampfen und dadurch das thermisch gekoppelte Kühlmittel des Kühlmittelkreises kühlen kann. Insbesondere kann diese Restmenge an verdampfbarem Kältemittel durch die Überhitzung am Ausgang des ersten Verdampfers eingestellt werden. Änderungen im Kühlbedarf der Elektronik, beispielsweise bei elektrischen Leistungsspitzen, können also nur dadurch angemessen kompensiert werden, dass die Menge an verdampfbarem Kältemittel am Ausgang des ersten Verdampfers, d.h. die Überhitzung an dieser Stelle, entsprechend verändert wird. Dies hat jedoch Einfluss auf die Kühlleistung des ersten Verdampfers und wirkt sich daher negativ auf den von den Insassen der Fahrgastzelle empfundenen Klimakomfort aus. Zudem erfordert eine derartige Flexibilität bei der Einstellung des ersten Verdampfers ein elektronisches Expansionsventil als Expansionsorgan, was im Vergleich zu unflexibleren thermostatischen Expansionsventilen deutlich kostenintensiver und daher nicht bevorzugt ist.

Es ist die Aufgabe der vorliegenden Erfindung, eine gattungsgemäße Klimatisierungsvorrichtung derart weiterzubilden, dass eine größere Unabhängigkeit im Betrieb von erstem Verdampfer und Koppel-Wärmeübertrager erreicht wird.

Diese Aufgabe wird in Verbindung mit den Merkmalen des Oberbegriffs von Anspruch 1 gelöst durch eine Zweigleitung, die in Strömungsrichtung des Kältemittels vor dem ersten Expansionsorgan von dem Kältemittel-Hauptkreis abzweigt, zwischen dem ersten Verdampfer und dem Koppel-Wärmeübertrager wieder in den Kältemittel-Hauptkreis mündet und ein steuerbares Zweigleitungs-Expansionsorgan aufweist.

Weiter wird die Aufgabe durch ein Betriebsverfahren gem. Anspruch 8 gelöst, d.h. durch ein Verfahren zum Betrieb einer derartigen Klimatisierungseinrichtung,
wobei das erste Expansionsorgan so gesteuert wird, dass eine im Normalbetrieb bei geschlossenem Zweigleitungs-Expansionsorgan zur Kühlung der Wärmequelle ausreichende Menge Kältemittel in verdampfbarem Zustand vom ersten Verdampfer in den Koppel-Wärmeübertrager strömt und bei als unzureichend festgestellter Kühlung der Wärmequelle die Menge an in verdampfbarem Zustand in den Koppel-Wärmeübertrager strömenden Kältemittels durch Öffnen des Zweigleitungs-Expansionsorgans erhöht wird.

Bevorzugte Ausführungsformen der Erfindung sind Gegenstand der abhängigen Patentansprüche.

Die Erfindung sieht im Kern eine den ersten Verdampfer umgehende Zweigleitung vor. Der Begriff der Umgehung soll dabei jedoch nicht bedeuten, dass das Kältemittel den ersten Verdampfer zwingend nicht mehr durchläuft, sondern stattdessen über den Alternativweg der Zweigleitung strömt. Vielmehr bietet die erfindungsgemäße Zweigleitung einen zusätzlichen Strömungspfad für das Kältemittel, welches folglich je nach Schaltung des ersten Expansionsorgans und des Zweigleitungs-Expansionsorgans parallel durch den ersten Verdampfer und die Zweigleitung strömen kann. Bei geschlossenem Zweigleitungs-Expansionsorgan unterscheidet sich der Betrieb einer erfindungsgemäßen Klimatisierungsvorrichtung im Grunde nicht von demjenigen der gattungsgemäßen Klimatisierungsvorrichtung. Ein Öffnen des Zweigleitungs-Expansionsorgans, was insbesondere in Phasen eines erhöhten Kühlbedarfs im Kühlmittelkreis erfolgt, bewirkt eine Erhöhung der Menge verdampfbaren Kältemittels am Eingang des Koppel-Wärmeübertragers, sodass in diesem eine höhere Kühlleistung erzielt werden kann. Die Kühlleistung des dem Koppel-Wärmeübertrager vorgeschalteten ersten Verdampfers wird dadurch nicht beeinflusst, da die Abzweigung der Zweigleitung im Hochdruckbereich des Kältemittelkreises erfolgt und der damit verbundene Druckverlust - zumindest in allen Situationen, in denen der Kältemittelkreis nicht an seinem extremen Leistungsmaximum arbeitet - in seiner Auswirkung auf die Druckregelung im ersten Verdampfer vernachlässigbar ist.

Die Erfindung ermöglicht somit eine bedarfsorientierte Variierbarkeit der Kühlleistung im Kühlmittelkreis, ohne dass dies zu einer Beeinträchtigung des Komfort in der durch den ersten Verdampfer klimatisierten Fahrgastzelle führen würde.

Bevorzugt ist das dem ersten Verdampfer vorgeschaltete, erste Expansionsorgan des Kältemittel-Hauptkreises ein thermostatisches Expansionsventil. Hierbei handelt es sich um eine besonders kostengünstige und robuste, wenngleich unflexible Ausgestaltung eines Expansionsorgans. Wie oben erläutert bedarf es aufgrund der vorliegenden Erfindung jedoch keiner Steuerungs-Flexibilität an dieser Stelle. Vielmehr ist die Flexibilisierung erfindungsgemäß in die Zweigleitung verlagert.

Sofern die mit einem thermostatischen Expansionsventil verbundenen Vorteile im Einzelfall keine wesentliche Rolle spielen, ist es alternativ jedoch auch möglich, eine andere Art von gesteuertem Expansionsorgan zu verwenden. In jedem Fall hat es sich als günstig erwiesen, wenn das erste Expansionsorgan des Kältemittel-Hauptkreises ein in Abhängigkeit von der Überhitzung des Kältemittels am Ausgang des ersten Verdampfers geregeltes Expansionsorgan ist. Mit anderen Worten wird das erste Expansionsorgan bevorzugt so gesteuert, dass sich am Ausgang des ersten Verdampfers eine vorgegebene, konstante Überhitzung des Kältemittels einstellt. Hierdurch wird die unabhängige Einstellbarkeit des ersten Verdampfers auf besonders einfache Weise sichergestellt.

Für das Zweigleitungs-Expansionsorgan ist grundsätzlich ebenfalls die Verwendung eines thermostatischen Expansionsventils denkbar, wobei dieses günstigerweise so angeschlossen wird, dass es in Abhängigkeit von der Überhitzung am Ausgang des Koppel-Wärmeübertragers arbeitet. Da der eigentliche Vorteil der Erfindung jedoch darin liegt, besonders flexibel auf Veränderungen im Kühlungsbedarf des Kühlmittekreises reagieren zu können, wird stattdessen bevorzugt, das Zweigleitungs-Expansionsorgan als ein elektronisches Expansionsventil, ein elektromagnetisches Steuerventil oder eine steuerbare Drossel auszugestalten. Insbesondere die Ausgestaltung als einfache, steuerbare Drossel hat keinerlei Kosten- oder Bauraumnachteile gegenüber einem thermostatischen Kältemittel am Eingang des Koppel-Wärmeübertragers ist mit einem solchen Bauelement jedoch wesentlich flexibler einstellbar. Dabei kann ohne weiteres eine Regelung des Zweigleitungs-Expansionsorgans vorgesehen sein, beispielsweise in Abhängigkeit von der Überhitzung am Ausgang des Koppel-Wärmeübertragers. Mit anderen Worten ist das Zweigleitungs-Expansionsorgan ein in Abhängigkeit von der Überhitzung des Kältemittels am Ausgang des Koppel-Wärmeübertragers geregeltes Expansionsorgan.

Hinsichtlich der Konstruktion des Koppel-Wärmeübertragers hat es sich als besonders günstig herausgestellt, wenn dieser als ein koaxialer Rohr-in-Rohr-Wärmeübertrager ausgebildet ist. Diese grundsätzlich bekannte Art von Wärmeübertragern ist besonders bauraumgünstig und, insbesondere bei Gegenstrombetrieb, sehr effizient.

Bislang war in Bezug auf den Kältemittel-Hauptkreis im Wesentlichen von nur einem für die Klimatisierung der Fahrgastzelle zuständigen Verdampfer, nämlich dem ersten Verdampfer, die Rede. Selbstverständlich ist die Erfindung auch auf Klimatisierungsvorrichtungen mit einer Zonenklimatisierung der Fahrgastzelle mittels mehrerer Verdampfer übertragbar. So ist bei einer Weiterbildung der Erfindung vorgesehen, dass der Kältemittel-Hauptkreis einen dem ersten Verdampfer parallel geschalteten, als zweiten Verdampfer betreibbaren Luft/Kältemittel-Wärmeübertrager mit einem vorgeschalteten, zweiten Expansionsorgan aufweist. Die beiden Verdampfer sind luftseitig günstigerweise mit unterschiedlichen Bereichen der Fahrgastzelle thermisch gekoppelt.

Weitere Merkmale und Vorteile der Erfindung ergeben sich aus der nachfolgenden, speziellen Beschreibung und den Zeichnungen.

Es zeigt:

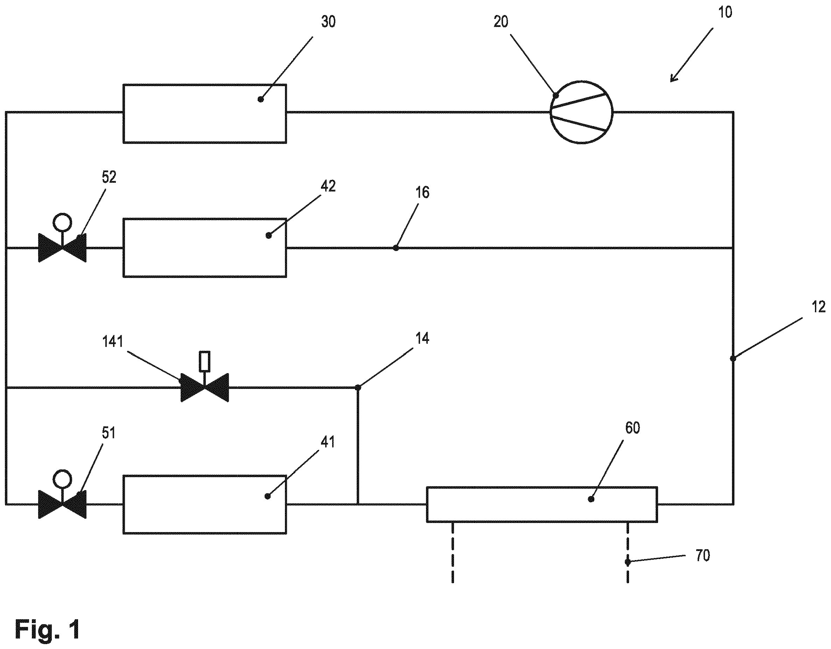

- Figur 1:: Eine schematische Darstellung einer erfindungsgemäßen Klimatisierungsvorrichtung.

Figur 1 zeigt in stark schematisierter Darstellung eine erfindungsgemäße Klimatisierungsvorrichtung mit einem Kältemittelkreis 10 und einem nur rudimentär angedeuteten Kühlmittelkreis 70. Der Kühlmittelkreis 70 dient bevorzugt der Temperierung nicht dargestellter elektrischer und elektronischer Komponenten, wie beispielsweise einer Leistungselektronik und/einer Traktionsbatterie.

Ein wesentlicher Bestandteil des Kältemittelkreises 10 ist dessen Kältemittel-Hauptkreis 12, der in üblicher Weise einen Kompressor 20, einen diesem in Kältemittel-Strömungsrichtung nachgeschalteten Kondensator/Gaskühler 30, einen ersten Verdampfer 41 und ein diesem vorgeschaltetes erstes Expansionsorgan 51, aufweist. Der erste Verdampfer 41 ist bevorzugt als Luft/Kältemittel-Wärmeübertrager ausgestaltet, der von einem Luftstrom durchsetzbar ist, welcher in nicht dargestellter Weise in eine ebenfalls nicht dargestellte Fahrgastzelle leitbar ist. Der erste Verdampfer 41 dient somit primär der Temperierung und/oder Entfeuchtung der Luft in besagter Fahrgastzelle. Sein Betrieb wird mittels des ersten Expansionsorgans 51 gesteuert oder geregelt. Das erste Expansionsorgan 51 ist vorzugsweise als thermostatisches Expansionsventil ausgebildet und in Abhängigkeit von der Überhitzung des Kältemittels am Ausgang des ersten Verdampfers 41 geregelt. Die Funktionsweise einer solchen Grundform einer Klimatisierungsvorrichtung ist dem Fachmann bekannt und soll an dieser Stelle nicht im Detail erläutert werden.

Im Kältemittel-Hauptkreis 12 ist weiter dem ersten Verdampfer 41 ein Koppel-Wärmeübertrager 60 nachgeschaltet, der als Kühlmittel/Kältemittel-Wärmeübertrager ausgebildet ist und die thermische Kopplung zwischen dem Kältemittelkreis 10 und dem Kühlmittelkreis 70 darstellt. Der Koppel-Wärmeübertrager 60 ist bevorzugt als koaxialer Rohr-in-Rohr-Wärmeübertrager ausgestaltet. Der Kältemittelkreis 10 weist weiter eine Zweigleitung 14 auf, die im Hochdruckbereich vor dem ersten Expansionsorgan 51 vom Hauptkreis 12 abzweigt und zwischen dem ersten Verdampfer 41 und dem Koppel-Wärmeübertrager 60 wieder in den Hauptkreis 12 mündet. In der Zweigleitung 14 ist ein Zweigleitungs-Expansionsorgan 141 angeordnet. Dieses ist bevorzugt als steuerbare Drossel ausgebildet, kann jedoch auch als jede andere Form steuerbaren Expansionsorgans gestaltet sein.

Bei der dargestellten Form der Klimatisierungsvorrichtung sind zwei parallel geschaltete Verdampfer vorgesehen. Zwischen dem Kondensator/Gaskühler 30 und dem ersten Expansionsorgan 51 zweigt daher eine Parallelleitung 16 vom Hauptkreis 12 ab, die zwischen dem Koppel-Wärmeübertrager und dem Kompressor 20 wieder in den Hauptkreis mündet. In dieser Parallelleitung 16 sind ein zweiter Verdampfer 42 und ein zweites Expansionsorgan 52, vorzugsweise ebenfalls ein thermostatisches Expansionsventil, angeordnet. Auch der zweite Verdampfer 42 ist als Luft/Kältemittel-Wärmeübertrager ausgebildet, wobei der ihn durchströmende Luftstrom ebenfalls in die Fahrgastzelle leitbar ist. Bevorzugt sind der erste Verdampfer 41 und der zweite Verdampfer 42 luftseitig so geschaltet, dass die von ihnen temperierten Luftströme in unterschiedliche Zonen der Fahrgastzelle geleitet werden. Vorteilhafterweise dient der zweite Verdampfer 42 der häufiger benötigten Klimatisierung des vorderen Bereichs der Fahrgastzelle und kann mit höherer Kühlleistung betrieben werden, als der erste Verdampfer 41, der vorzugsweise der Klimatisierung des hinteren Fahrgastzellenbereichs dient.

Bezüglich des bevorzugten Betriebsverfahrens der erfindungsgemäßen Klimatisierungsvorrichtung, welches eine bedarfsgerechte Kühlung der elektrischen Komponenten unabhängig vom Betrieb des ersten Verdampfers 41 ermöglicht, sei auf die Erläuterungen im allgemeinen Teil der Beschreibung verwiesen.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Rahmen der Patentansprüche ein breites Spektrum an Variationsmöglichkeiten an die Hand gegeben.

### Bezugszeichenliste

- 10: Kältemittelkreis
- 12: Kältemittel-Hauptkreis
- 14: Zweigleitung
- 141: Zweigleitungs-Expansionsorgan
- 16: Parallelleitung
- 20: Kompressor
- 30: Kondensator/Gaskühler
- 41: erster Verdampfer
- 42: zweiter Verdampfer
- 51: erstes Expansionsorgan
- 52: zweites Expansionsorgan
- 60: Koppel-Wärmeübertrager
- 70: Kühlmittekreis

## Patentansprüche

1. Klimatisierungsvorrichtung für ein Kraftfahrzeug, umfassend
- einen Kältemittelkreis (10) mit einem Kältemittel-Hauptkreis (12), der einen Kompressor (20), einen Kondensator/Gaskühler (30), ein erstes Expansionsorgan (51) und einen als einen ersten Verdampfer (41) betreibbaren Luft/Kältemittel-Wärmeübertrager aufweist, die in Strömungsrichtung des Kältemittels in dieser Reihenfolge im Kältemittel-Hauptkreis (12) angeordnet sind, sowie
- einen Kühlmittelkreis (70) mit einer Kühlmittelpumpe und einem thermisch mit einer Wärmequelle gekoppelten Aufnahme-Wärmeübertrager,
wobei der Kältemittelkreis (10) und der Kühlmittelkreis (70) mittels eines als Kühlmittel/Kältemittel-Wärmeübertrager ausgebildeten Koppel-Wärmeübertragers (60), der kältemittelseitig in Strömungsrichtung des Kältemittels dem ersten Verdampfer (41) nachgeschaltet und ebenfalls als Verdampfer betreibbar ist, thermisch miteinander gekoppelt sind,
**gekennzeichnet durch**
eine Zweigleitung (14), die in Strömungsrichtung des Kältemittels vor dem ersten Expansionsorgan (51) von dem Kältemittel-Hauptkreis abzweigt, zwischen dem ersten Verdampfer (41) und dem Koppel-Wärmeübertrager (60) wieder in den Kältemittel-Hauptkreis (12) mündet und ein steuerbares Zweigleitungs-Expansionsorgan (141) aufweist.

2. Klimatisierungsvorrichtung nach Anspruch 1,
**dadurch gekennzeichnet,**
**dass** das erste Expansionsorgan (51) des Kältemittel-Hauptkreises (12) ein thermostatisches Expansionsventil ist.

3. Klimatisierungsvorrichtung nach einem der vorangehenden Ansprüche,
**dadurch gekennzeichnet,**
**dass** das erste Expansionsorgan (51) des Kältemittel-Hauptkreises (12) ein in Abhängigkeit von der Überhitzung des Kältemittels am Ausgang des ersten Verdampfers (41) geregeltes Expansionsorgan ist.

4. Klimatisierungsvorrichtung nach einem der vorangehenden Ansprüche,
**dadurch gekennzeichnet,**
**dass** das Zweigleitungs-Expansionsorgan (141) ein elektronisches Expansionsventil, ein elektromagnetisches Steuerventil oder eine steuerbare Drossel ist.

5. Klimatisierungsvorrichtung nach einem der vorangehenden Ansprüche,
**dadurch gekennzeichnet,**
**dass** das Zweigleitungs-Expansionsorgan (141) ein in Abhängigkeit von der Überhitzung des Kältemittels am Ausgang des Koppel-Wärmeübertragers (60) geregeltes Expansionsorgan ist.

6. Klimatisierungsvorrichtung nach einem der vorangehenden Ansprüche,
**dadurch gekennzeichnet,**
**dass** der Koppel-Wärmeübertrager (60) als ein koaxialer Rohr-in-Rohr-Wärmeübertrager ausgebildet ist.

7. Klimatisierungsvorrichtung nach einem der vorangehenden Ansprüche,
**dadurch gekennzeichnet,**
**dass** der Kältemittel-Hauptkreis (12) einen dem ersten Verdampfer (41) parallel geschalteten, als zweiten Verdampfer (42) betreibbaren Luft/Kältemittel-Wärmeübertrager mit einem vorgeschalteten, zweiten Expansionsorgan (52) aufweist.

8. Verfahren zum Betrieb einer Klimatisierungseinrichtung nach einem der vorangehenden Ansprüche,
wobei das erste Expansionsorgan (51) so gesteuert wird, dass eine im Normalbetrieb bei geschlossenem Zweigleitungs-Expansionsorgan (141) zur Kühlung der Wärmequelle ausreichende Menge Kältemittel in verdampfbarem Zustand vom ersten Verdampfer (41) in den Koppel-Wärmeübertrager (60) strömt und bei als unzureichend festgestellter Kühlung der Wärmequelle die Menge an in verdampfbarem Zustand in den Koppel-Wärmeübertrager (60) strömenden Kältemittels durch Öffnen des Zweigleitungs-Expansionsorgans (141) erhöht wird.

9. Verfahren nach Anspruch 8,
**dadurch gekennzeichnet,**
**dass** das erste Expansionsorgan (51) so gesteuert wird, dass sich am Ausgang des ersten Verdampfers (41) eine vorgegebene, konstante Überhitzung des Kältemittels einstellt.

## Claims

1. An air conditioning device for a motor vehicle, comprising
- a refrigerant circuit (10) with a refrigerant main circuit (12) having a compressor (20), a capacitor/gas cooler (30), a first expansion organ (51) and an air/refrigerant heat exchanger operable as a first evaporator (41) that are arranged in the direction of flow of the refrigerant in this sequence in the refrigerant main circuit (12), as well as
- a cooling agent circuit (70) with a cooling agent pump and a receiver heat exchanger thermally coupled with a heat source,
wherein the refrigerant circuit (10) and the cooling agent circuit (70) are thermally intercoupled by means of a coupling heat exchanger (60) configured as cooling agent/refrigerant-heat exchanger that is downstream refrigerant-side in the direction of flow of the first evaporator (41) and also operable as evaporator, **characterised in that**
a branch line (14) branching before the first expansion organ (51) in the flow of direction of the refrigerant off the refrigerant main circuit, opens up between the first evaporator (41) and the coupling heat exchanger (60) into the refrigerant main circuit (12), and having a controllable branch line expansion organ (141).

2. The air conditioning device according to claim 1,
**characterised in that**
the first expansion organ (51) of the refrigerant main circuit (12) is a thermostatic expansion valve.

3. The air conditioning device according to one of the preceding claims, **characterised in that** the first expansion organ (51) of the refrigerant main circuit (12) is an expansion organ regulated depending on the overheating of the refrigerant at the outlet of the first evaporator (41).

4. The air conditioning device according to one of the preceding claims, **characterised in that** the branch line expansion organ (141) is an electronic expansion valve, an electromagnetic control valve or a controllable restrictor.

5. The air conditioning device according to one of the preceding claims, **characterised in that** the branch line expansion organ (141) is an expansion organ regulated depending on the overheating of the refrigerant at the outlet of the coupling heat exchanger (60).

6. The air conditioning device according to one of the preceding claims, **characterised in that** the coupling heat exchanger (60) is configured as a coaxial pipe-in-pipe heat exchanger.

7. The air conditioning device according to one of the preceding claims, **characterised in that** the refrigerant main circuit (12) has an air/refrigerant heat exchanger connected in parallel with the first evaporator (41), operable as a second evaporator (42), with a second expansion organ (52) connected upstream.

8. A method for operating an air conditioning device according to one of the preceding claims,
wherein the first expansion organ (51) is controlled as such that a quantity of refrigerant sufficient for cooling the heat source in normal operation and with the branch line expansion organ (141) closed flows in vapourable state from the first evaporator (41) into the coupling heat exchanger (60), and when the cooling of the heat source is determined insufficient the quantity of refrigerant flowing in vapourable state into the coupling heat exchanger (60) is increased by opening the branch line expansion organ (141).

9. The method according to claim 8,
**characterised in that**
the first expansion organ (51) is controlled as such that a pre-set, constant overheating of the refrigerant is set at the outlet of the first evaporator (41).

## Revendications

1. Dispositif de climatisation pour un véhicule automobile, comprenant
- un circuit de fluide réfrigérant (10) avec un circuit principal de fluide réfrigérant (12), qui comporte un compresseur (20), un condensateur/refroidisseur de gaz (30), un premier organe d'expansion (51) et un échangeur de chaleur air/fluide réfrigérant pouvant fonctionner comme un premier évaporateur (41), qui sont agencés dans cet ordre dans le circuit principal de fluide réfrigérant (12) dans la direction du flux du fluide réfrigérant, ainsi que
- un circuit de liquide de refroidissement (70) avec une pompe pour liquide de refroidissement et un échangeur de chaleur-réceptacle couplé thermiquement avec une source de chaleur,
dans lequel le circuit de fluide réfrigérant (10) et le circuit de liquide de refroidissement (70) sont couplés l'un avec l'autre thermiquement au moyen d'un échangeur de chaleur de couplage conçu comme un échangeur de chaleur de liquide de refroidissement/fluide réfrigérant (60), qui est relié en aval au premier évaporateur (41) du côté du fluide réfrigérant dans la direction du flux du liquide de refroidissement et peut aussi fonctionner comme un évaporateur,
**caractérisé par**
un tube de dérivation (14), qui bifurque dans la direction du flux du fluide réfrigérant avant le premier organe d'expansion (51) du circuit principal de fluide réfrigérant, qui débouche de nouveau dans le circuit principal de fluide réfrigérant (12) entre le premier évaporateur (41) et l'échangeur de chaleur de couplage (60) et qui comporte un organe d'expansion du tube de dérivation qui peut être commandé (141).

2. Dispositif de climatisation selon la revendication 1, **caractérisé en ce que**
le premier organe d'expansion (51) du circuit principal de fluide réfrigérant (12) est une vanne d'expansion thermostatique.

3. Dispositif de climatisation selon l'une des revendications précédentes, **caractérisé en ce que** le premier organe d'expansion (51) du circuit principal de fluide réfrigérant (12) est un organe d'expansion réglé en fonction de la surchauffe du fluide réfrigérant à la sortie du premier évaporateur (41).

4. Dispositif de climatisation selon l'une des revendications précédentes, **caractérisé en ce que** l'organe d'expansion du tube de dérivation (141) est une vanne d'expansion électronique, une vanne de commande électromagnétique ou un étrangleur qui peut être commandé.

5. Dispositif de climatisation selon l'une des revendications précédentes, **caractérisé en ce que** l'organe d'expansion du tube de dérivation (141) est un organe d'expansion réglé en fonction de la surchauffe du fluide réfrigérant à la sortie de l'échangeur de chaleur de couplage (60).

6. Dispositif de climatisation selon l'une des revendications précédentes, **caractérisé en ce que** l'échangeur de chaleur de couplage (60) est conçu comme un échangeur de chaleur tube-en-tube coaxial.

7. Dispositif de climatisation selon l'une des revendications précédentes, **caractérisé en ce que** le circuit principal de fluide réfrigérant (12) comporte un échangeur de chaleur air/fluide réfrigérant, monté parallèlement au premier évaporateur (41) et pouvant fonctionner comme deuxième évaporateur (42), avec un deuxième organe d'expansion placé en amont (52).

8. Procédé de fonctionnement d'un dispositif de climatisation selon l'une des revendications précédentes,
dans lequel le premier organe d'expansion (51) est commandé de telle sorte qu'une quantité suffisante de fluide réfrigérant à l'état vaporisable en fonctionnement normal avec l'organe d'expansion du tube de dérivation fermé (141) pour le refroidissement de la source de chaleur circule du premier évaporateur (41) dans l'échangeur de chaleur de couplage (60) et, en cas de refroidissement de la source de chaleur détecté comme insuffisant, la quantité de fluide réfrigérant à l'état vaporisable et circulant dans l'échangeur de chaleur de couplage (60) est augmentée en ouvrant l'organe d'expansion du tube de dérivation (141).

9. Procédé selon la revendication 8,
**caractérisé en ce que**
le premier organe d'expansion (51) est commandé de telle sorte qu'une surchauffe prédéterminée et constante du fluide réfrigérant est réglée à la sortie du premier évaporateur (41).
